# EUROPEAN PATENT APPLICATION

(11) **EP 4 811 304 A1**
(43) Date of publication of application: **23.09.2026**
(21) Application number: 26160259.3
(22) Date of filing: 24.02.2026
(51) Int. Cl.: G06V 10/82, G06V 30/10, G06V 30/412

(54) **INFORMATION PROCESSING APPARATUS, INFORMATION PROCESSING SYSTEM, INFORMATION PROCESSING METHOD, AND CARRIER MEDIUM**

(30) Priority: 18.03.2025 JP 2025043383; 20.11.2025 JP 2025201033
(71) Applicant: Ricoh Company, Ltd., Tokyo 143-8555 (JP)
(72) Inventor: Iwasaki, Ryo, Tokyo, 143-8555 (JP)
(74) Representative: SSM Sandmair

(57) **Abstract**

An information processing apparatus includes an extraction unit (48, 50) to extract a value of an item from a past form image; a storage unit (12) to store extraction results and information related to a correction to the value of the item extracted from the past form image; an item determination unit (54) to determine, based on the information related to the correction, an item for which a large language model is used to extract a value among items included in a form image to be analyzed; an instruction output unit (56) to extract a value of the determined item from the form image to be analyzed by using the large language model; and a registration unit (60) to register, in the storage unit (12), the value extracted using the large language model from the form image to be analyzed. The past form image is an image of a same form as the form image to be analyzed.

## Description

### BACKGROUND

### Technical Field

The present disclosure relates to an information processing apparatus, an information processing system, an information processing method, and a carrier medium.

### Related Art

Form recognition techniques have been developed to extract form items included in a form image and values of the form items and associate the items with the values. For example, based on form definition information that defines positional relationships between form items included in a form image and values of the form items, form items corresponding to character strings recognized in the form image and values of the form items are extracted from the form image, and the extracted form items and values are associated with each other (see, for example, Japanese Patent No. 7211276).

The values of form items extracted from a form image by the above-described technique may include errors, or may be corrected depending on user usage. In such cases, the same correction as that performed for a past form may be required on a new form.

### SUMMARY

The present disclosure described herein provides an information processing apparatus including an extraction unit to extract a value of an item from a past form image; a storage unit to store extraction results and information related to a correction to the value of the item extracted from the past form image; an item determination unit to determine, based on the information related to the correction, an item for which a large language model is used to extract a value among items included in a form image to be analyzed; an instruction output unit to extract a value of the determined item from the form image to be analyzed by using the large language model; and a registration unit to register, in the storage unit, the value extracted using the large language model from the form image to be analyzed. The past form image is an image of a same form as the form image to be analyzed.

The present disclosure described herein provides an information processing system including the information processing apparatus described above, and a user terminal connected via network to communicate with the information processing apparatus. The user terminal includes a display control unit to cause a display device to display a screen including the value of the item extracted from the form image to be analyzed

The present disclosure described herein provides an information processing method including extracting a value of an item from a past form image; storing, in a storage unit, extraction results and information related to a correction to the value of the item extracted from the past form image; determining, based on the information related to the correction, an item for which a large language model is used to extract a value among items included in a form image to be analyzed; extracting a value of the determined item from the form image to be analyzed by using the large language model; and registering, in the storage unit, the value extracted using the large language model from the form image to be analyzed. The past form image is an image of a same form as the form image to be analyzed.

The present disclosure described herein provides a carrier medium carrying computer readable codes which, when executed by a computer system, cause the computer system to carry out a method. The method includes extracting a value of an item from a past form image; storing, in a storage unit, extraction results and information related to a correction to the value of the item extracted from the past form image; determining, based on the information related to the correction, an item for which a large language model is used to extract a value among items included in a form image to be analyzed; extracting a value of the determined item from the form image to be analyzed by using the large language model; and registering, in the storage unit, the value extracted using the large language model from the form image to be analyzed. The past form image is an image of a same form as the form image to be analyzed

According to one aspect of the present disclosure, the values of items included in a form image can be extracted more efficiently based on a correction for a past form.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a configuration of an information processing system according to a first embodiment;
FIG. 2 is a diagram illustrating a hardware configuration of a computer;
FIG. 3 is a block diagram illustrating a functional configuration of the information processing system according to the first embodiment;
FIG. 4 is a diagram illustrating a configuration of form definition information;
FIG. 5 is a flowchart illustrating an overview of a processing procedure performed by the information processing system according to the first embodiment;
FIG. 6 is a sequence diagram illustrating a form analysis process in step S2 of FIG. 5;
FIG. 7 is a diagram illustrating a configuration of optical character recognition (OCR) results of a form image to be analyzed;
FIG. 8 is a diagram illustrating a configuration of training data;
FIG. 9 is a diagram illustrating a configuration of extraction results of a past form image;
FIG. 10 is a flowchart illustrating processing of step S22 of FIG. 6;
FIG. 11 is a diagram illustrating an example of a configuration of form data of a past form image;
FIG. 12 is a diagram illustrating a configuration of a prompt created in step S26 of FIG. 6;
FIG. 13 is a sequence diagram of a form confirmation process in step S3 of FIG. 5 and a registration process in step S4 of FIG. 5;
FIGS. 14A and 14B (FIG. 14) are diagrams illustrating an extraction result confirmation screen;
FIG. 15 is a diagram illustrating a processing procedure performed by the information processing system according to the first embodiment;
FIG. 16 is a sequence diagram of processing alternative to the processing of steps S10 and S12 of FIG. 6; and
FIGS. 17A and 17B are diagrams illustrating configurations of prompts.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment

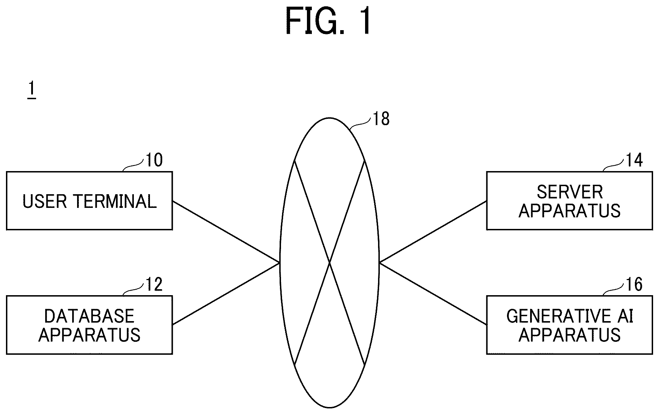

FIG. 1 is a diagram illustrating a configuration of an information processing system 1 according to a first embodiment. In the information processing system 1 illustrated in FIG. 1, a user terminal 10, a database apparatus 12, a server apparatus 14, and a generative artificial intelligence (AI) apparatus 16 are connected to communicate with each other via a communication network 18. The communication network 18 is, for example, but not limited to, the Internet or a local area network (LAN).

To the information processing system 1 illustrated in FIG. 1, an image forming apparatus that reads a form image by a scanner function may be connected to communicate therewith. To the information processing system 1 illustrated in FIG. 1, a system, such as a core system that performs a specific process using form recognition results, may be connected to communicate therewith. The system that performs a specific process using form recognition results is, for example, but not limited to, an accounting system or a quotation creation system.

The server apparatus 14 is an example of an information processing apparatus that extracts values of form items included in a form image to be analyzed. The server apparatus 14 extracts form items included in a form image to be analyzed and values of the form items, and outputs the form items and the values of the form items in association with each other. Processing for extracting form items included in a form image to be analyzed and values of the form items and outputting the form items and the values of the form items in association with each other is referred to as, for example, form recognition. The term "extract" includes extracting values of items included in a form image as-is and extracting values of items included in a form image after applying correction (e.g., replacement of characters and correction of typographical errors) to the values.

The server apparatus 14 is an information processing apparatus such as a personal computer (PC) or a workstation. The server apparatus 14 may be implemented by a plurality of computers, or may be implemented as a cloud service.

The server apparatus 14 may be, for example, but not limited to, a multifunction peripheral (MFP), a projector (PJ), an interactive whiteboard (IWB), which is an electronic whiteboard having mutual communication capability, an output apparatus such as digital signage, a head-up display (HUD) apparatus, a piece of industrial machinery, an imaging apparatus, a sound collecting apparatus, a piece of medical equipment, a networked home appliance, or an automobile (connected car). The term "MFP" may refer to a multifunction product or multifunction printer.

The user terminal 10 receives operations of a user who uses the information processing system 1. The user terminal 10 is an information processing terminal such as a PC, a tablet terminal, a mobile phone, a game console, a personal digital assistant (PDA), or a digital camera. The user terminal 10 may display results of processing performed by the server apparatus 14, such as form recognition.

The database apparatus 12 stores various types of information used by the information processing system 1 according to the first embodiment to perform processing. The various types of information used by the information processing system 1 according to the first embodiment to perform processing include databases described below, such as an image database, a form type determination database, a form definition database, and a form recognition result database. The database apparatus 12 is an information processing apparatus such as a PC or a workstation. The database apparatus 12 may be implemented by a plurality of computers, or may be implemented as a cloud service.

The generative AI apparatus 16 includes a large language model that performs processing in accordance with a prompt. Generative AI is artificial intelligence that generates new content based on data that the generative AI has been trained on. The large language model is a natural language processing model trained using a large amount of text data. As the large language model, Bidirectional Encoder Representations from Transformers (BERT), Generative Pre-Trained Transformer (GPT), or the like may be used. The large language model may be a multimodal large language model (multimodal LLM) that enables the processing of information other than text.

As described below, the generative AI apparatus 16 extracts values of form items from a form image to be analyzed in accordance with a prompt received from the server apparatus 14. Thus, as described below, the server apparatus 14 creates a prompt and causes the large language model of the generative AI apparatus 16 to generate an answer to the prompt. Details of the prompt received by the generative AI apparatus 16 from the server apparatus 14 will be described below.

The generative AI apparatus 16 is an information processing apparatus such as a PC or a workstation. The generative AI apparatus 16 may be implemented by a plurality of computers, or may be implemented as a cloud service.

The configuration of the information processing system 1 illustrated in FIG. 1 is merely an example. The information processing system 1 may include another apparatus. The database apparatus 12, the server apparatus 14, and the generative AI apparatus 16 may be collectively implemented by a single computer.

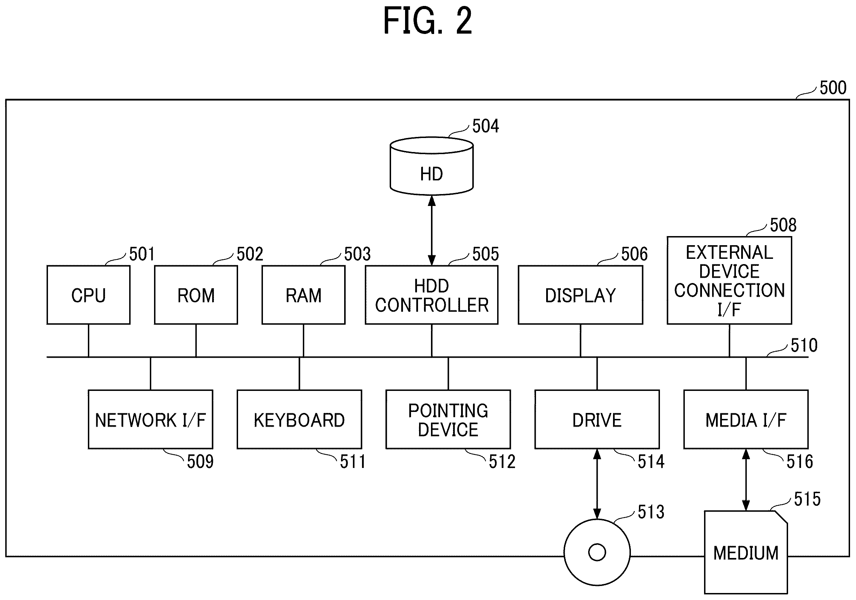

The database apparatus 12, the server apparatus 14, and the generative AI apparatus 16 illustrated in FIG. 1 are implemented by, for example, a computer 500 having a hardware configuration illustrated in FIG. 2. The user terminal 10 may also be implemented by the computer 500 having the hardware configuration illustrated in FIG. 2.

FIG. 2 is a diagram illustrating a hardware configuration of the computer 500. The computer 500 includes a central processing unit (CPU) 501, a read only memory (ROM) 502, a random access memory (RAM) 503, a hard disk (HD) 504, a hard disk drive (HDD) controller 505, a display 506, an external device connection interface (I/F) 508, a network I/F 509, a data bus 510, a keyboard 511, a pointing device 512, a drive 514, and a media I/F 516.

The CPU 501 controls the overall operation of the computer 500 in accordance with a program. The CPU 501 is an example of a processor, and may include a device such as a graphics processing unit (GPU). The ROM 502 stores a program such as an initial program loader (IPL) to boot the CPU 501. The RAM 503 is used as a work area for the CPU 501.

The HD 504 stores various types of data such as a program. The HDD controller 505 controls reading and writing of various types of data from and to the HD 504 under the control of the CPU 501.

The display 506 displays various types of information such as a cursor, a menu, a window, characters, or an image. The external device connection I/F 508 is an interface for connecting the computer 500 to various external devices. The network I/F 509 is an interface that controls data communication via the communication network 18. The data bus 510 is, for example, an address bus that electrically connects the components of the computer 500, such as the CPU 501, with one another.

The keyboard 511 is an example of an input device provided with a plurality of keys for inputting characters, numerical values, various instructions, or the like. The pointing device 512 is an example of an input device used to, for example, select or execute various instructions, select a target for processing, or move a cursor. The drive 514 controls reading and writing of various types of data from and to a removable recording medium 513. One example of the recording medium 513 is a digital versatile disc rewritable (DVD-RW). Other examples of the recording medium 513 may include a digital versatile disc recordable (DVD-R). The media I/F 516 controls reading and writing (storing) of data from and to a recording medium 515 such as flash memory.

The hardware configuration illustrated in FIG. 2 is merely an example. Some of the components illustrated in FIG. 2 may be removed from the computer 500, or one or more components may be included in addition to the components illustrated in FIG. 2.

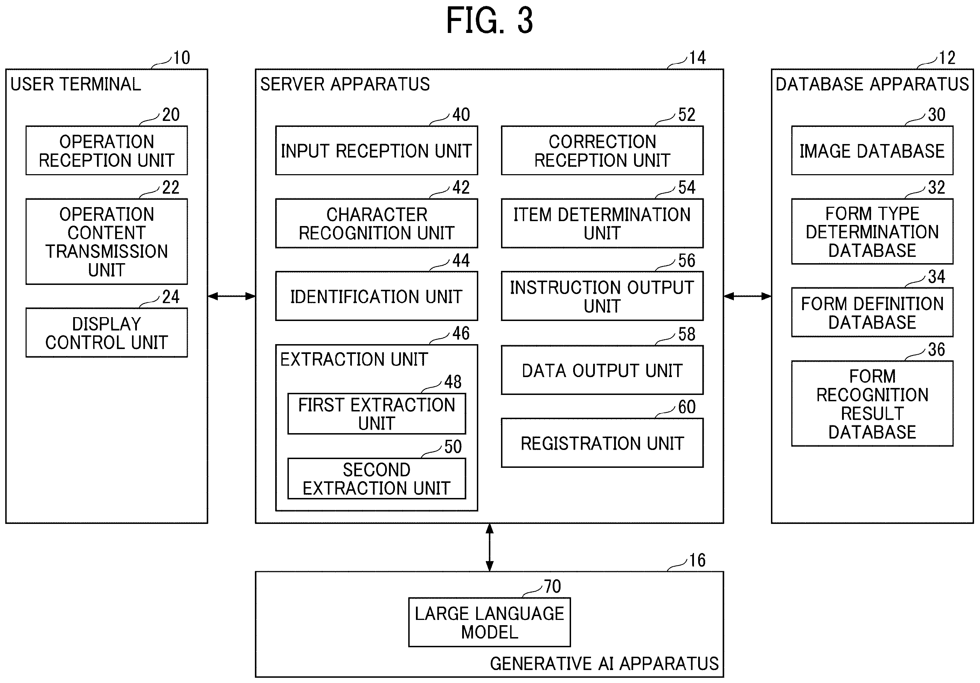

The information processing system 1 according to the first embodiment is implemented by, for example, a functional configuration illustrated in FIG. 3. FIG. 3 is a block diagram illustrating a functional configuration of the information processing system 1 according to the first embodiment. In the functional configuration illustrated in FIG. 3, components not relevant to the first embodiment are omitted as appropriate.

The user terminal 10, the database apparatus 12, the server apparatus 14, and the generative AI apparatus 16 illustrated in FIG. 1 execute programs such as an operating system (OS) and applications to implement, for example, the functional configuration illustrated in FIG. 3.

The user terminal 10 illustrated in FIG. 3 includes an operation reception unit 20, an operation content transmission unit 22, and a display control unit 24. The operation reception unit 20 receives a user operation. The operation reception unit 20 receives various operations directed to the server apparatus 14. For example, the operation reception unit 20 receives a user operation to input a form image.

The operation content transmission unit 22 transmits, to the server apparatus 14, the content of the user operation (operation information) received by the operation reception unit 20. The operation information indicates the operation received from the user via an input device such as a keyboard. For example, in accordance with the user operation received by the operation reception unit 20 to input a form image, the operation content transmission unit 22 transmits the form image to the server apparatus 14.

The display control unit 24 causes the display 506 to display a result of processing performed by the server apparatus 14 in accordance with the content of the operation transmitted by the operation content transmission unit 22. The display 506 is an example of a display device. For example, as described below, the display control unit 24 causes the display device to display an image including values of form items extracted from a form image to be analyzed.

The database apparatus 12 illustrated in FIG. 3 includes an image database 30, a form type determination database 32, a form definition database 34, and a form recognition result database 36.

The image database 30 stores form images. For example, a form image received from the user terminal 10 is stored in the image database 30. The form type determination database 32 stores form type determination information. The form type determination information is referred to in order to determine a type of a form. The form definition database 34 stores form definition information. The form definition information is referred to in order to perform form recognition. The form recognition result database 36 stores results of form recognition.

The generative AI apparatus 16 illustrated in FIG. 3 includes a large language model 70 that performs processing in accordance with a prompt. The large language model 70 is an example of a machine learning model that performs generative AI processing of the generative AI apparatus 16. For example, the large language model 70 performs processing to extract values of form items from a form image to be analyzed in accordance with a prompt received from the server apparatus 14. The large language model 70 generates an answer to the prompt such that the answer includes the values of the form items extracted from the form image to be analyzed, and returns the answer to the prompt to the server apparatus 14.

The server apparatus 14 illustrated in FIG. 3 includes an input reception unit 40, a character recognition unit 42, an identification unit 44, an extraction unit 46, a correction reception unit 52, an item determination unit 54, an instruction output unit 56, a data output unit 58, and a registration unit 60.

The input reception unit 40 receives various inputs to the server apparatus 14. For example, the input reception unit 40 receives input of a form image to be analyzed. The input reception unit 40 may receive, as the form image to be analyzed, a form image stored in the image database 30 of the database apparatus 12.

The character recognition unit 42 recognizes characters from the form image. The character recognition unit 42 recognizes, from the form image, a character string and a position where the character string is arranged on the form image. The character recognition unit 42 performs optical character recognition (OCR) on the form image to recognize a character string from the form image and a position where the character string is arranged on the form image. The character recognition unit 42 outputs recognition results indicating the character string recognized from the form image and the position where the character string is arranged on the form image.

The identification unit 44 refers to the form type determination information stored in the form type determination database 32 and identifies a type of the form image to be analyzed. The type of the form image to be analyzed includes, for example, information indicating an issuer of a form in the form image to be analyzed and information indicating a form type of the form. The type of the form image to be analyzed identified by the identification unit 44 is used to identify form definition information that is referred to in order to perform form recognition. The identification unit 44 identifies form definition information, which is referred to in order to perform form recognition, and training data, based on the type of the form image to be analyzed.

The extraction unit 46 extracts values of form items from the form image to be analyzed, based on the form definition information and the training data identified by the identification unit 44. The extraction unit 46 extracts form items and values of the form items from the form image to be analyzed, based on the form definition information and the training data identified by the identification unit 44 and the recognition results of the character recognition unit 42. The extraction unit 46 outputs extraction results in which the form items extracted from the form image to be analyzed are associated with their values. The form definition information and the training data are examples of position definition information that defines positions of values of items in a form.

The extraction unit 46 illustrated in FIG. 3 includes a first extraction unit 48 and a second extraction unit 50, each of which is an example of an extraction unit. The first extraction unit 48 extracts values of form items from the form image, based on form definition information that defines positional relationships between form items and values of the form items. For example, the first extraction unit 48 extracts values of form items from a form image to be analyzed, based on the form definition information that defines positional relationships between form items and values of the form items. The second extraction unit 50 extracts values of form items from the form image, based on training data. For example, the second extraction unit 50 extracts values of form items from a form image to be analyzed, based on training data including corrections received from the user for values of form items in past form images of the same form as the form image to be analyzed. The term "same type" refers to forms having the same classification. For example, forms issued by the same issuer are forms of the same type. For example, forms of the same form type (such as a purchase order) are forms of the same type.

The form definition information is, for example, position definition information of a form image having a versatile layout and used by a plurality of users. The training data includes corrections received from the user for values of form items extracted by the first extraction unit 48 from the form image. The training data, which is the corrections received from the user, has higher priority than the form definition information.

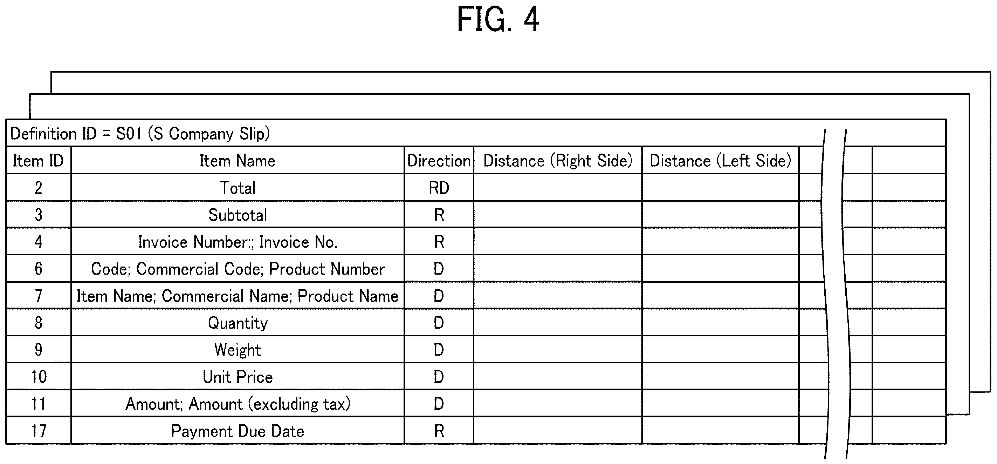

The form definition information is configured as illustrated in, for example, FIG. 4. FIG. 4 is a diagram illustrating a configuration of the form definition information.

The form definition information is generated for each definition identification (ID), and includes an item ID, an item name, a direction, and a distance. The item ID contains values, each of which represents an identifier for identifying an item in the form. The item name contains values, each of which represents a name of an item in the form. The direction and the distance indicate a range from which a character string is extracted. For example, when the value of the direction is "RD" and a value of the distance is "20 mm", this indicates that a character string serving as an item value is extracted from a range within 20 mm downward from the coordinates of the lower-right corner of a rectangle circumscribing the character string serving as the item name. In other words, the direction and the distance are conditions indicating a range from which a character string serving as an item value is extracted, and are associated with the item name. In the example illustrated in FIG. 4, the direction and the distance are given as conditions indicating a range from which a character string serving as an item value is extracted. However, other information may be included.

Accordingly, for example, a character string extracted from a range within 20 mm downward from the coordinates of the lower-right corner of a rectangle circumscribing the character string representing the item name "Total" is extracted as an item value associated with the item name "Total".

The correction reception unit 52 illustrated in FIG. 3 receives, from the user, correction of values of form items extracted by the extraction unit 46. The corrections received by the correction reception unit 52 for the values of the form items extracted by the first extraction unit 48 from the form image are stored as training data in, for example, the form recognition result database 36 of the database apparatus 12. The training data including the corrections received by the correction reception unit 52 for the values of the form items extracted by the first extraction unit 48 from the form image provides higher accuracy for extracting values of form items intended by the user than the form definition information.

The item determination unit 54 identifies, from the database apparatus 12, extraction results obtained by extracting values of form items from a past form image of the same form as the form image to be analyzed. Further, the item determination unit 54 determines, based on the identified extraction results obtained by extracting values of form items from the past form image of the same form as the form image to be analyzed, a form item for which the large language model 70 is to be used to extract a value of the form item from the form image to be analyzed.

For example, the item determination unit 54 determines, as the form item for which the large language model 70 is to be used, a form item for which the correction reception unit 52 has received correction in a past form image of the same form as the form image to be analyzed.

The item determination unit 54 may determine, as the form item for which the large language model 70 is to be used, a form item for which the second extraction unit 50 having higher priority than the first extraction unit 48 has extracted a value and for which the correction reception unit 52 has received correction in a past form image of the same form as the form image to be analyzed.

The instruction output unit 56 uses the large language model 70 to extract a value of the form item for which the item determination unit 54 has determined that the large language model 70 is to be used. The instruction output unit 56 creates an instruction for extracting the value of a form item from the form image to be analyzed based on the form item for which the item determination unit 54 has determined that the large language model 70 is to be used, and outputs the instruction to the large language model 70. The instruction for extracting a value of a form item from the form image to be analyzed based on the form item for which the item determination unit 54 has determined that the large language model 70 is to be used is, for example, a prompt.

The instruction output unit 56 presents, to the large language model 70, recognition results obtained by the character recognition unit 42 recognizing a past form image of the same form as the form image to be analyzed, and a corrected value of a form item that is to be extracted and for which correction has been received among values of form items extracted based on the recognition results. Further, the instruction output unit 56 outputs an instruction to the large language model 70 to extract a value of the form item to be extracted, based on recognition results recognized from the form image to be analyzed.

The data output unit 58 outputs data (e.g., image data, Hypertext Markup Language (HTML) data, etc.) for causing the display 506 of the user terminal 10 to display an image or a screen (e.g., an extraction result confirmation screen) including the form image to be analyzed and the values of the form items extracted from the form image to be analyzed. The user can check, on the display 506 of the user terminal 10, the image including the form image to be analyzed and the values of the form items extracted from the form image to be analyzed.

The registration unit 60 registers form recognition results of the form image to be analyzed, which is checked by the user through display on the display 506 of the user terminal 10, in the database apparatus 12. Further, the registration unit 60 stores corrections received by the correction reception unit 52 in the database apparatus 12.

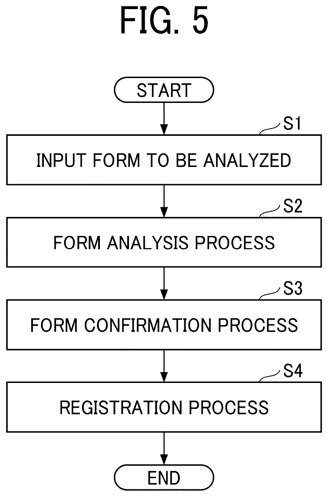

FIG. 5 is a flowchart illustrating an overview of a processing procedure performed by the information processing system 1 according to the first embodiment. The process illustrated by the flowchart of FIG. 5 is performed for each form image to be analyzed.

In step S1, the server apparatus 14 receives input of a form to be analyzed, such as when a form image to be analyzed is uploaded.

In step S2, the server apparatus 14 performs a form analysis process for analyzing the form image to be analyzed. As described in detail below, in the form analysis process, an item value extraction method to be performed for items in the form image to be analyzed is changed based on extraction results obtained by extracting values of form items from a past form image of the same form as the form image to be analyzed.

In step S3, the server apparatus 14 performs a form confirmation process to prompt the user to check and correct the result of the form analysis process in step S2. The form confirmation process will be described in detail below.

In step S4, the server apparatus 14 performs a registration process for updating form data described below, the extraction results, and the training data in accordance with the result of the form analysis process in step S2 and a result of the form confirmation process in step S3.

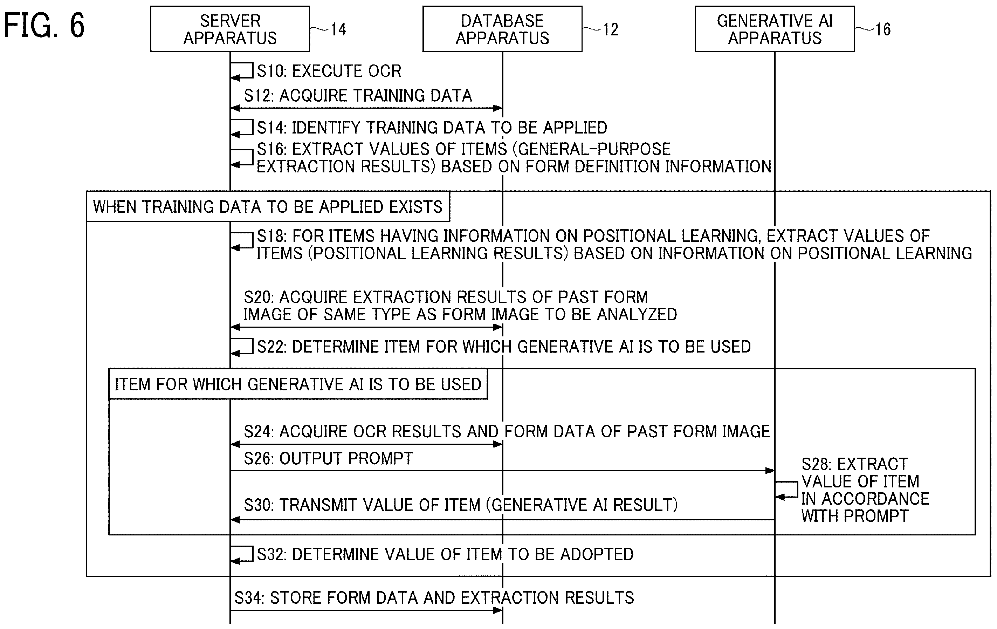

FIG. 6 is a sequence diagram illustrating the form analysis process in step S2.

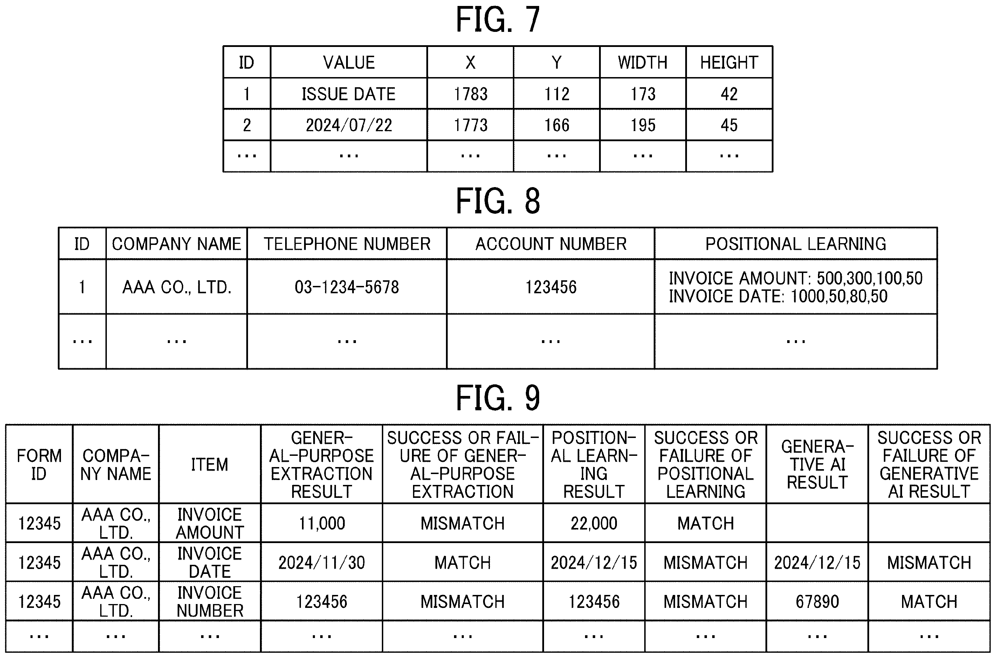

In step S10, the character recognition unit 42 of the server apparatus 14 executes OCR on the form image to be analyzed and acquires, for example, OCR results illustrated in FIG. 7. FIG. 7 is a diagram illustrating a configuration of the OCR results of the form image to be analyzed. The OCR results include full-text OCR results of the form image to be analyzed. The OCR results include, for each character string recognized from the form image, information on the value indicated by the character string and information on the position of the character string on the form image.

In step S12, the identification unit 44 of the server apparatus 14 acquires training data from the database apparatus 12. FIG. 8 is a diagram illustrating a configuration of the training data. The training data includes information for identifying an issuer of the form to be analyzed and information on positional learning. In FIG. 8, a company name, a telephone number, and an account number are illustrated as an example of the information for identifying the issuer of the form to be analyzed. In FIG. 8, an item name for which positional learning is performed and coordinate information indicating the position where positional learning is performed are illustrated as an example of the information on positional learning.

In step S14, the identification unit 44 identifies training data to be applied (identifies training data for the issuer of the form to be analyzed and the type of the form) by using the OCR results acquired in step S10 and the training data acquired in step S12. The identification unit 44 identifies the issuer of the form to be analyzed and the type of the form based on the OCR results acquired in step S10, and identifies training data for the issuer of the form to be analyzed and the type of the form based on the training data acquired in step S12. The issuer of the form to be analyzed and the type of the form may be identified based on a user selection. If no form recognition has been performed by positional learning for past form images of the same type as the form to be analyzed, the training data to be applied is not identified.

In step S16, the first extraction unit 48 of the server apparatus 14 identifies form definition information to be referred to in order to perform form recognition by general-purpose extraction, based on the issuer of the form to be analyzed and the type of the form. The first extraction unit 48 extracts, as general-purpose extraction results of the form image to be analyzed, form items and values of the form items from the form image to be analyzed, based on the form definition information identified by the identification unit 44 and the recognition results of the character recognition unit 42.

If the training data to be applied is identified in step S14, the second extraction unit 50 of the server apparatus 14 performs processing of step S18. In step S18, the second extraction unit 50 refers to the training data identified in step S14, and extracts, for items having information on positional learning, form items and values of the form items from the form image to be analyzed, as positional learning results of the form image to be analyzed, based on the information on positional learning.

In step S20, the item determination unit 54 of the server apparatus 14 identifies, from the database apparatus 12, extraction results of a past form image of the same form as the form image to be analyzed, and acquires the extraction results. For example, the item determination unit 54 identifies and acquires extraction results of a past form image of the same issuer or the same type of form, based on the issuer of the form to be analyzed or the type of the form identified by the identification unit 44 from the form image to be analyzed. FIG. 9 is a diagram illustrating a configuration of extraction results of a past form image. The extraction results of the past form image illustrated in FIG. 9 include, as information, a form ID, a company name, an item, a general-purpose extraction result, success or failure of general-purpose extraction, a positional learning result, success or failure of positional learning, a generative AI result, and success or failure of generative AI. The success or failure of general-purpose extraction, the success or failure of positional learning, and the success or failure of generative AI are examples of information related to the correction for extracted item values. The information related to the correction is information that enables determination of whether correction has been performed for the extracted item values. The information related to the correction may be, for example, information indicating whether the form item values registered by the user match the extraction results, or may include the form item values registered by the user and the extraction results.

By comparing the form item values registered by the user with the extraction results, it can be determined whether correction has been performed for the extracted item values.

The form ID is identification information for identifying a form in the information processing system 1. The company name corresponds to a value of the item "Company name" in the form. The item represents an item name of the form. The general-purpose extraction result is a result of general-purpose extraction in which form recognition is performed by general-purpose extraction, and includes, for example, a value "11,000" of an item "Invoice amount". The success or failure of general-purpose extraction indicates whether a form item value registered by the user matches a form item value corresponding to the general-purpose extraction result ("match") or does not match the form item value corresponding to the general-purpose extraction result ("mismatch"). When the success or failure of general-purpose extraction indicates that no match is found ("mismatch"), the form item value extracted by general-purpose extraction (the first extraction unit 48) has been corrected by the user.

The positional learning result is a result of positional learning in which form recognition is performed by positional learning, and includes, for example, a value "22,000" of an item "Invoice amount". The success or failure of positional learning indicates whether a form item value registered by the user matches a form item value corresponding to the positional learning result ("match") or does not match the form item value corresponding to the positional learning result ("mismatch"). When the success or failure of positional learning indicates that no match is found ("mismatch"), the form item value extracted by positional learning (the second extraction unit 50) has been corrected by the user.

The generative AI result is a result of generative AI in which form recognition is performed by generative AI. The success or failure of generative AI indicates whether a form item value registered by the user matches a form item value corresponding to the generative AI result ("match") or does not match the form item value corresponding to the generative AI result ("mismatch"). When the success or failure of generative AI indicates that no match is found ("mismatch"), the form item value extracted by the generative AI has been corrected by the user.

In step S22, the item determination unit 54 determines a form item for which the large language model 70 is to be used to extract a value of the form item, based on the training data to be applied, which is identified in step S14, and the extraction results of the past form image acquired in step S20.

For example, the item determination unit 54 refers to the information on positional learning in the training data to be applied, which is identified in step S14, and determines, as the form item for which the large language model 70 is to be used, a form item for which correction has been received from the user in a past form image of the same form as the form image to be analyzed.

The item determination unit 54 may determine, as the form item for which the large language model 70 is to be used, a form item for which the second extraction unit 50 having higher priority than the first extraction unit 48 has extracted a value and for which the correction reception unit 52 has received correction in a past form image of the same form as the form image to be analyzed.

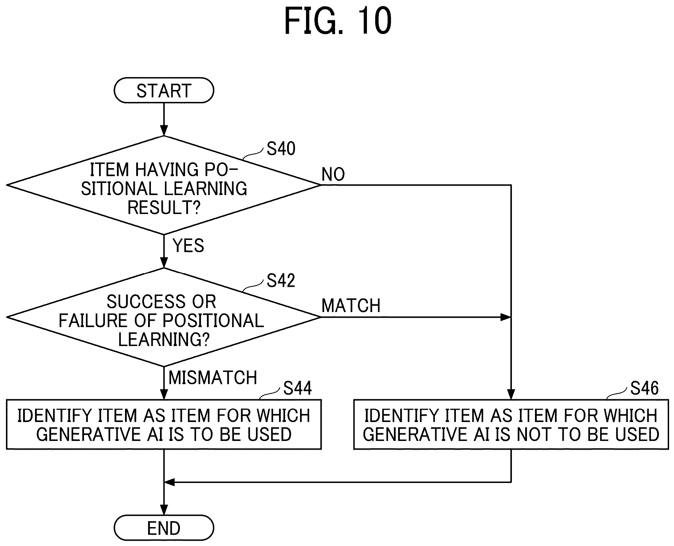

FIG. 10 is a flowchart illustrating the processing of step S22. The processing of step S22 is performed for each form item to be analyzed.

In step S40, the item determination unit 54 refers to the extraction results of the past form image acquired in step S20 and determines whether the target item is an item having a positional learning result. If the target item is not an item having a positional learning result, the item determination unit 54 proceeds to step S46 and identifies the target item as an item for which the generative AI is not to be used.

If the target item is an item having a positional learning result, the item determination unit 54 proceeds to step S42 and determines whether the success or failure of positional learning indicates "match" or "mismatch". If the success or failure of positional learning indicates "match," the item determination unit 54 proceeds to step S46 and identifies the target item as an item for which the generative AI is not to be used. If the success or failure of positional learning indicates "mismatch," the item determination unit 54 proceeds to step S44 and identifies the target item as an item for which the generative AI is to be used.

In the process illustrated by the flowchart of FIG. 10, among items in the form image to be analyzed, an item for which the success or failure of positional learning in form recognition performed for a past form image of the same form as the form image to be analyzed indicates "mismatch" can be identified as an item for which the generative AI is to be used.

Referring back to FIG. 6, the processing of steps S24 to S30 is performed for each form item for which it is determined in step S22 that the large language model 70 is to be used. In step S24, the instruction output unit 56 acquires OCR results and form data of a past form image of the same form as the form image to be analyzed.

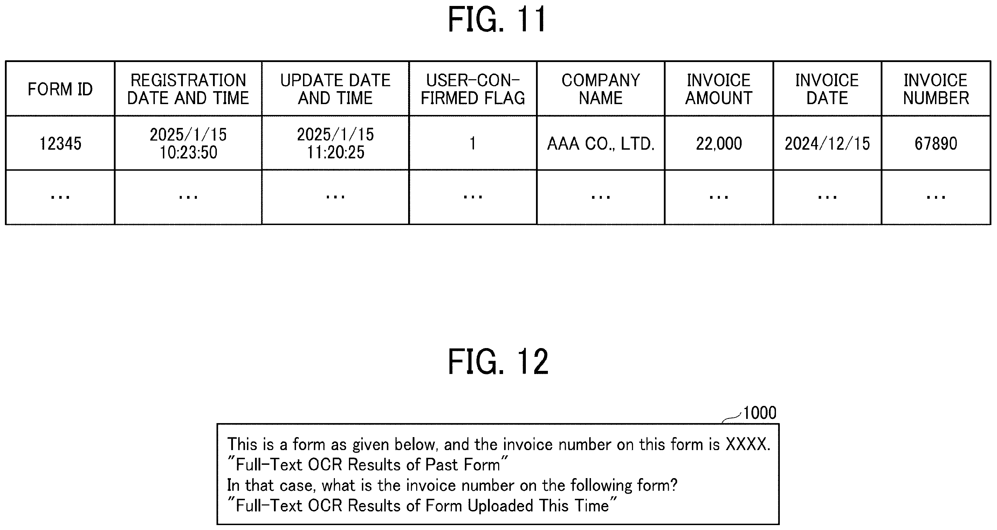

FIG. 11 is a diagram illustrating a configuration of the form data of the past form image. The form data of the past form image illustrated in FIG. 11 includes, as information, a form ID, a registration date and time, an update date and time, a user-confirmed flag, a company name, an invoice amount, an invoice date, and an invoice number.

The form ID is identification information for identifying a form in the information processing system 1. The registration date and time is a date and time when the form analysis process was performed. The update date and time is the date and time when the user modified a result of the form analysis process. The user-confirmed flag is information indicating whether confirmation by the user has been completed. The user-confirmed flag indicates that confirmation by the user has not been completed when the value is "0", and indicates that confirmation by the user has been completed when the value is "1", for example. The company name, the invoice amount, the invoice date, and the invoice number indicate values of respective items.

In step S26, the instruction output unit 56 creates a prompt that instructs the large language model 70 to extract a value of a form item from the form image to be analyzed based on the form item for which the item determination unit 54 has determined that the large language model 70 is to be used, and outputs the prompt to the large language model 70 of the generative AI apparatus 16.

FIG. 12 is a diagram illustrating a configuration of a prompt 1000 created in step S26. The prompt 1000 illustrated in FIG. 12 includes OCR results of a past form image of the same form as the form image to be analyzed, which is obtained by the character recognition unit 42, a value corrected by the user for the form item for which it is determined in step S22 that the large language model 70 is to be used, and OCR results of the form image to be analyzed. The prompt 1000 illustrated in FIG. 12 may include a value obtained prior to the user's correction of the form item for which it is determined in step S22 that the large language model 70 is to be used. The prompt 1000 illustrated in FIG. 12 indicates an example in which the form item for which it is determined in step S22 that the large language model 70 is to be used is "Invoice number".

In step S28, the large language model 70 of the generative AI apparatus 16 performs processing to extract a value of a form item from the form image to be analyzed in accordance with the prompt received from the server apparatus 14. For example, when the prompt received from the server apparatus 14 is the prompt 1000 illustrated in FIG. 12, the large language model 70 extracts the value of the form item "Invoice number" from the OCR results of the form image to be analyzed, based on the information presented by the prompt, namely, the OCR results of the past form image of the same form as the form image to be analyzed, which is obtained by the character recognition unit 42, and the value corrected by the user for the item.

In step S30, the generative AI apparatus 16 transmits a generative AI result that is the value of the item extracted in step S28 to the server apparatus 14. In step S32, the registration unit 60 of the server apparatus 14 determines a value of an item to be adopted, based on the general-purpose extraction results, the positional learning results, and the generative AI results. The general-purpose extraction results, the positional learning results, and the generative AI results are examples of an item value extraction method to be performed for items in the form image to be analyzed.

For example, the registration unit 60 sets the priority for adoption in the order of the generative AI results, the positional learning results, and the general-purpose extraction results. Highest priority is given to adoption from the generative AI results, followed by the positional learning results, and finally the general-purpose extraction results.

In step S34, the registration unit 60 stores the OCR results of the form to be analyzed in the database apparatus 12. The registration unit 60 stores the form data illustrated in FIG. 11 and the extraction results illustrated in FIG. 9 in accordance with the general-purpose extraction results, the positional learning results, and the generative AI results extracted from the form to be analyzed.

The items "Company name," "Invoice amount," "Invoice date," and "Invoice number" in the form data illustrated in FIG. 11 serve as values of items to be adopted determined in step S32 of FIG. 6.

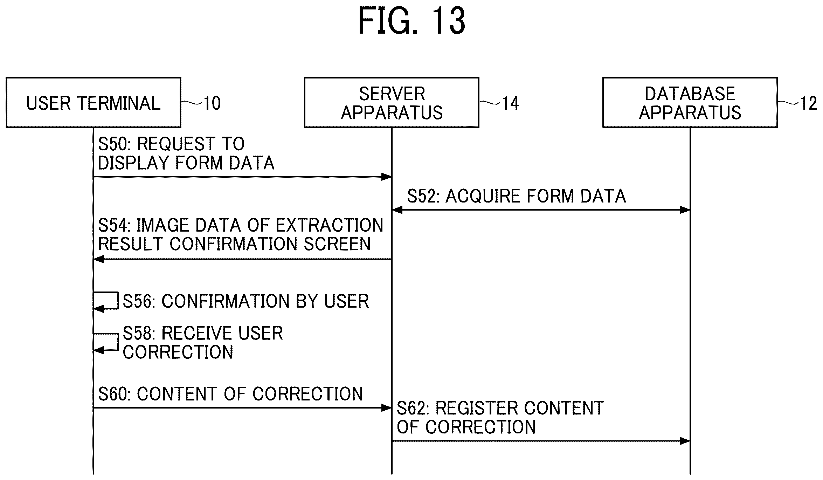

FIG. 13 is a sequence diagram of the form confirmation process in step S3 of FIG. 5 and the registration process in step S4 of FIG. 5. In step S50, the user terminal 10 makes a request to the server apparatus 14 to display form data based on a user operation.

In step S52, the server apparatus 14 acquires, from the database apparatus 12, the form data requested by the user terminal 10 to be displayed. In step S54, the server apparatus 14 outputs image data for causing the display 506 of the user terminal 10 to display an extraction result confirmation screen including the form image to be analyzed and values of form items extracted in the form analysis process in step S2 from the form image to be analyzed.

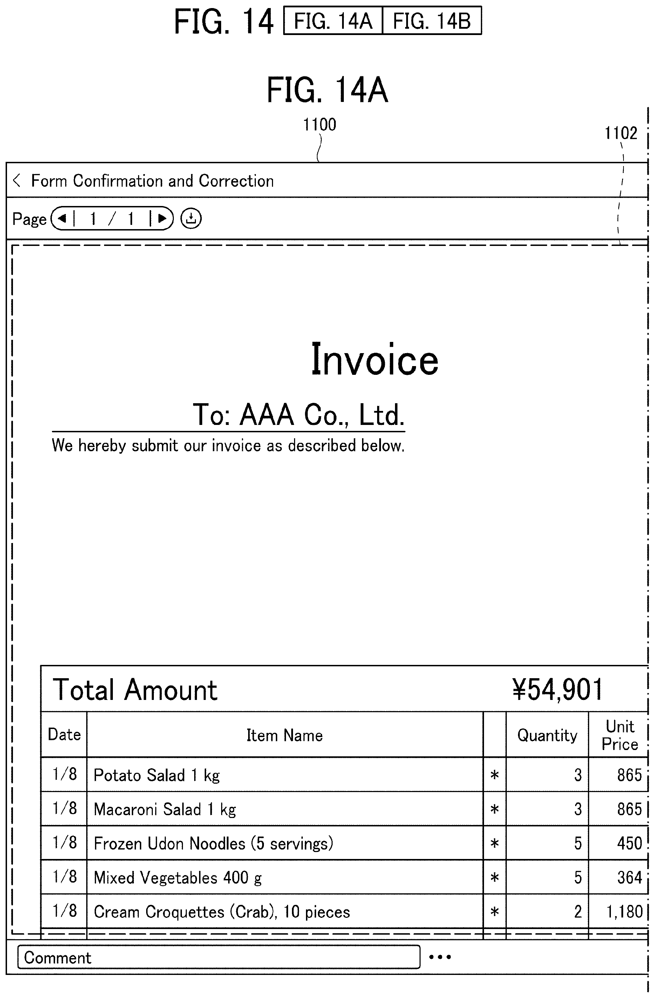

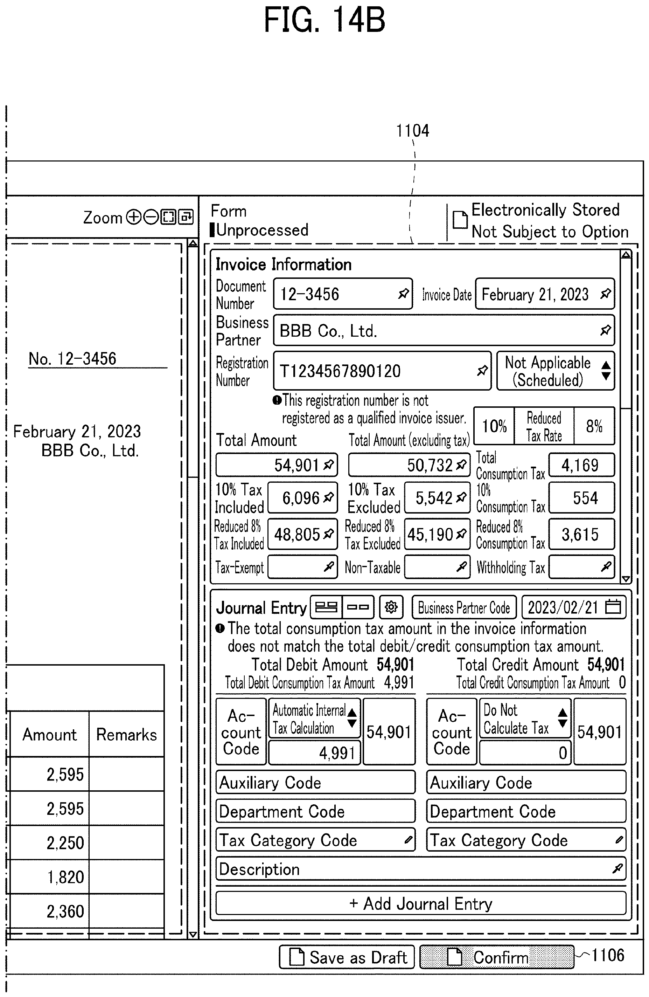

The display control unit 24 of the user terminal 10 that has received the image data from the server apparatus 14 causes the display 506 of the user terminal 10 to display an extraction result confirmation screen 1100 as illustrated FIGS. 14A and 14B (FIG. 14). FIGS. 14A and 14B are diagrams illustrating the extraction result confirmation screen 1100.

The extraction result confirmation screen 1100 displays a form image 1102 to be analyzed and form data 1104 extracted in the form analysis process in step S2 from the form image 1102 to be analyzed. A user who views the extraction result confirmation screen 1100 illustrated in FIGS. 14A and 14B can confirm content of the form data 1104 extracted in the form analysis process in step S2 from the form image 1102 to be analyzed while referring to the form image 1102 to be analyzed.

In step S56, the user of the user terminal 10 confirms the content of the form data 1104 extracted in the form analysis process from the form image 1102 to be analyzed while referring to the form image 1102 to be analyzed on the extraction result confirmation screen 1100. The form data 1104 on the extraction result confirmation screen 1100 illustrated in FIGS. 14A and 14B may be displayed such that, for each display field in which a value of an item is displayed, extraction methods (general-purpose extraction, positional learning, and generative AI) used to extract the value of the item are visually recognizable.

For example, in the form data 1104 on the extraction result confirmation screen 1100 illustrated in FIGS. 14A and 14B, a display field of a value of an item for which the generative AI result is adopted may be displayed in a different manner (e.g., color) from that for a display field of a value of an item for which the general-purpose extraction result or the positional learning result is adopted in order to allow recognition of the item for which the generative AI result is adopted.

A portion to be corrected, such as an error, in the content of the form data 1104 extracted in the form analysis process from the form image 1102 to be analyzed is corrected by the user of the user terminal 10 through the extraction result confirmation screen 1100 illustrated in FIGS. 14A and 14B. In step S58, the operation reception unit 20 of the user terminal 10 receives a user operation to correct the portion to be corrected. When the extraction result confirmation screen 1100 illustrated in FIGS. 14A and 14B does not include a portion to be corrected or when a portion to be corrected is eliminated by the correction, the user performs presses a confirmation button 1106 on the extraction result confirmation screen 1100 to confirm the content of the form data 1104. In response to receipt of the operation of pressing the confirmation button 1106, the user terminal 10 proceeds to step S60.

In step S60, the operation content transmission unit 22 of the user terminal 10 transmits the correction indicated by the user operation received in step S58 to the server apparatus 14. In step S62, the registration unit 60 of the server apparatus 14 registers the correction, which is received from the user terminal 10, in the database apparatus 12.

For example, the registration unit 60 corrects the form data illustrated in FIG. 11 by overwriting values of items in the form data with the correction received from the user terminal 10. The registration unit 60 registers, based on the correction received from the user terminal 10, information on the success or failure of general-purpose extraction, the success or failure of positional learning, and the success or failure of generative AI in the extraction results illustrated in FIG. 9. Thus, for the information on the success or failure of general-purpose extraction, the success or failure of positional learning, and the success or failure of generative AI in the extraction results illustrated in FIG. 9, "match" is registered when the match with the values of the items in the form data illustrated in FIG. 11 confirmed by the form confirmation process in step S3 is found, and "mismatch" is registered when no match is found.

For example, it is assumed that the item is "date," the positional learning result presents the date value expressed using the delimiter "/" (slash), and the user corrects the date value to a format using the delimiter "-" (hyphen). In this case, the information processing system 1 can present the user's correction to the large language model 70 in subsequent form recognition, thereby allowing the large language model 70 to extract an item value that matches the correction intended by the user from a form to be analyzed.

In the information processing system 1, for example, when the user corrects a typographical error in the value of a positional learning result, the user's correction can be presented to the large language model 70 in subsequent form recognition, thereby allowing the large language model 70 to extract an item value that matches the correction intended by the user from a form to be analyzed.

In the information processing system 1 according to the present embodiment, furthermore, the large language model 70 of the generative AI apparatus 16 extracts a value of an item from a form to be analyzed, thereby allowing support for multilingual forms and support for a plurality of types of forms. For example, since the information processing system 1 according to the present embodiment causes the large language model 70 of the generative AI apparatus 16 to extract a value of an item from a form to be analyzed, even form definition information that supports invoices, delivery notes, and receipts written in Japanese can be used to extract a value of an item from a form image in a different language.

Further, in the information processing system 1, for example, when the user corrects the value of a positional learning result, such as a date expressed as "Jan/3/2024," on a form for use in the United States to "2024/1/3", the user's correction can be presented to the large language model 70 in subsequent form recognition, thereby allowing the large language model 70 to extract an item value that matches the correction intended by the user from a form to be analyzed.

Furthermore, for example, since the information processing system 1 according to the present embodiment causes the large language model 70 of the generative AI apparatus 16 to extract a value of an item from a form to be analyzed, values of items can be extracted from a plurality of types of form images having different formats.

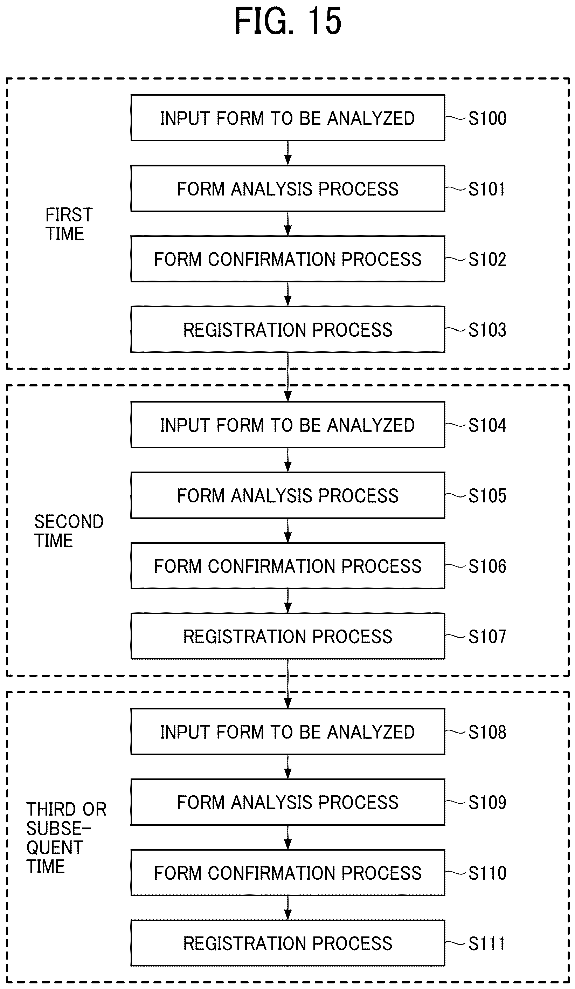

FIG. 15 is a diagram illustrating a specific example of the processing procedure performed by the information processing system 1 according to the first embodiment. FIG. 15 illustrates an example in which a type of a form to be uploaded to the server apparatus 14 is a type of form that has not been uploaded to the server apparatus 14 so far (i.e., a form uploaded for the first time).

In step S100, the server apparatus 14 receives input of a form to be uploaded for the first time as a form to be analyzed.

In step S101, the server apparatus 14 performs a form analysis process for analyzing the form image to be analyzed. The processing of steps S101 to S103 is processing performed for the first time, and a general-purpose extraction method is selected.

In step S102, the server apparatus 14 performs a form confirmation process to prompt the user to check and correct the result of the form analysis process by general-purpose extraction in step S101. The description will continue assuming that the user has corrected the position of the invoice number.

In step S103, the server apparatus 14 corrects the value of the invoice number in the form data. Further, the server apparatus 14 registers "match" for items other than the invoice number and registers "mismatch" for the invoice number as to the success or failure of general-purpose extraction in the extraction results. The server apparatus 14 also registers, in the item of positional learning in the training data, a position (e.g., coordinates) from which the invoice number is to be extracted.

In step S104, the server apparatus 14 receives input of a form of the same type (the same issuer) as the form uploaded in step S100.

In step S103, the server apparatus 14 performs a form analysis process for analyzing the form image to be analyzed. The processing of steps S104 to S107 is processing performed for the second time, and since the training data exists, a general-purpose extraction method and a positional learning extraction method are selected.

Specifically, the server apparatus 14 selects the general-purpose extraction method for all items in the form image to be analyzed, and selects the positional learning extraction method for the item of the invoice number for which the training data exists.

In step S106, the server apparatus 14 performs a form confirmation process to prompt the user to check and correct the result of the form analysis process by general-purpose extraction and positional learning in step S105. The description will be continued assuming that the user has corrected the content of the invoice number.

In step S107, the server apparatus 14 corrects the value of the invoice number in the form data. Further, the server apparatus 14 registers "match" for items other than the invoice number and registers "mismatch" for the invoice number as to the success or failure of general-purpose extraction in the extraction results. The server apparatus 14 registers "mismatch" for the invoice number as to the success or failure of positional learning in the extraction results. The server apparatus 14 also registers the corrected content of the invoice number.

In step S108, the server apparatus 14 receives input of a form of the same type (the same issuer) as the forms uploaded in steps S100 and S104.

In step S109, the server apparatus 14 performs a form analysis process for analyzing the form image to be analyzed. The processing of steps S108 to S111 is processing performed for the third or subsequent time, and a general-purpose extraction method, a positional learning extraction method, and a generative AI extraction method are selected.

Specifically, the server apparatus 14 selects the general-purpose extraction method for all items in the form image to be analyzed, and selects the positional learning extraction method for the item of the invoice number for which the training data exists. Further, the server apparatus 14 selects the generative AI extraction method for the item of the invoice number for which the corrected content has been registered.

In step S110, the server apparatus 14 performs a form confirmation process to prompt the user to check and correct the result of the form analysis process by general-purpose extraction, positional learning, and the generative AI in step S109. The description will be continued assuming that no correction is made by the user.

In step S111, for example, as described as the processing of step S32 of FIG. 6, the server apparatus 14 determines a value of an item to be adopted from the general-purpose extraction results, the positional learning results, and the generative AI results, and corrects the value of the invoice number in the form data to the value of the item to be adopted. The server apparatus 14 updates the form data, the extraction results, and the training data.

As described above, in the first embodiment, when the result of form recognition by general-purpose extraction or positional learning is corrected by the user, the correction is stored and presented to the large language model 70 in subsequent form recognition, thereby allowing the large language model 70 to perform form recognition. Accordingly, item values included in a form image can be more efficiently extracted.

### Second Embodiment

In a second embodiment, a file including a plurality of form images is divided into individual form image data using the generative AI apparatus 16. In the second embodiment, furthermore, a type of a form image is determined using the generative AI apparatus 16.

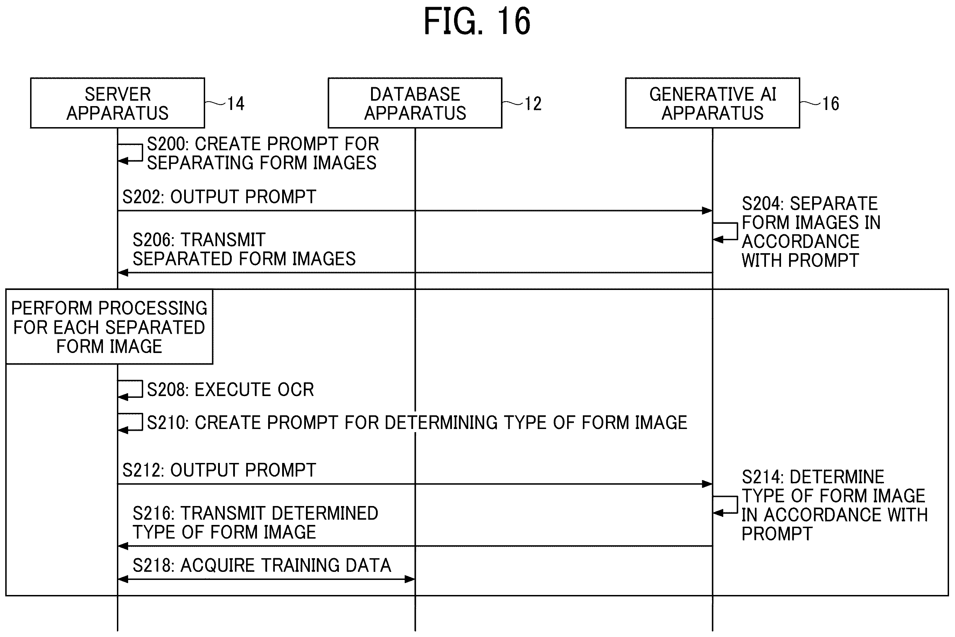

FIG. 16 is a sequence diagram illustrating processing alternative to the processing of steps S10 and S12 of FIG. 6.

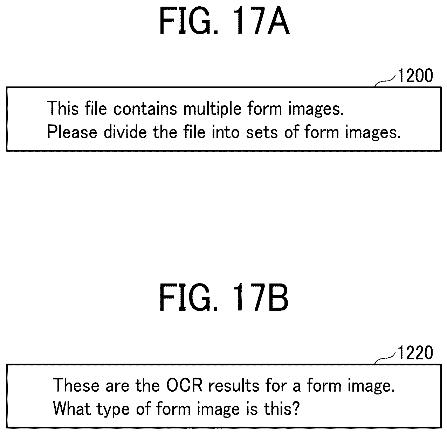

In step S200, the instruction output unit 56 creates, for example, a prompt 1200 illustrated in FIG. 17A for dividing a file including a plurality of form images into individual form image data. In step S202, the instruction output unit 56 outputs the prompt 1200 illustrated in FIG. 17A created in step S200 to the large language model 70 of the generative AI apparatus 16.

In step S204, the large language model 70 of the generative AI apparatus 16 performs processing to separate a plurality of form images included in a file into individual form images in accordance with the prompt received from the server apparatus 14. In step S206, the generative AI apparatus 16 transmits the form images separated in step S204 to the server apparatus 14.

Thus, even when a file includes a plurality of form images, the information processing system 1 according to the second embodiment allows uploading of the form images without separation of the form images by a user.

The processing of steps S208 to S218 is performed for each form image separated in step S204.

In step S208, the character recognition unit 42 of the server apparatus 14 executes OCR on each form image separated in step S204 and acquires OCR results of the form image to be analyzed.

In step S210, the instruction output unit 56 creates, for example, a prompt 1220 illustrated in FIG. 17B for determining a type of each form image separated in step S204. In step S212, the instruction output unit 56 outputs the prompt 1220 illustrated in FIG. 17B created in step S210 to the large language model 70 of the generative AI apparatus 16.

In step S214, the large language model 70 of the generative AI apparatus 16 performs processing to determine a type of each form image separated in step S204 in accordance with the prompt received from the server apparatus 14. In step S216, the generative AI apparatus 16 transmits the type of the form image determined in step S214 to the server apparatus 14.

Thus, the information processing system 1 according to the second embodiment allows the type of a form image to be determined without a selection of the type of the form image by a user.

In step S218, the identification unit 44 of the server apparatus 14 acquires training data from the database apparatus 12. The processing after step S218 is substantially the same as the processing after step S12 of FIG. 6, and illustration and description thereof are thus omitted.

The functions of the database apparatus 12 and the server apparatus 14 according to the first embodiment or the second embodiment may be implemented as functions of an image forming apparatus that reads a form image by a scanner function. Such an image forming apparatus reads a form image by the scanner function to implement the processing of the first embodiment or the second embodiment for the form image to store form recognition results, and can provide a function of checking and correcting a form recognition result to the user.

Each of the functions in the embodiments described above may be implemented by one or more pieces of processing circuitry. As used herein, the term "processing circuitry" includes processors programmed to implement each function by software, such as processors implemented by electronic circuits, and devices designed to implement the functions described above, such as an application-specific integrated circuit (ASIC), a digital signal processor (DSP), a field programmable gate array (FPGA), and conventional circuit modules.

While the present disclosure has been described with reference to embodiments, the present disclosure is not limited to the configurations in the embodiments described above. Various changes may be made to such configurations without departing from the scope of the present disclosure, and the configurations may be appropriately determined according to application forms.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus comprising:
an extraction unit (48, 50) configured to extract a value of an item from a past form image, the past form image being an image of a same form as a form image to be analyzed;
a storage unit (12) configured to store extraction results and information related to a correction to the value of the item extracted from the past form image;
an item determination unit (54) configured to determine, based on the information related to the correction, an item for which a large language model is used to extract a value among items included in the form image to be analyzed;
an instruction output unit (56) configured to extract a value of the determined item from the form image to be analyzed by using the large language model; and
a registration unit (60) configured to register, in the storage unit (12), the value extracted using the large language model from the form image to be analyzed.

2. The information processing apparatus according to claim 1, further comprising a correction reception unit (52) configured to receive a correction of the value of the item extracted from the past form image by the extraction unit (48, 50),
wherein the item determination unit (54) is configured to determine, as the item for which the large language model is used, the item for which the correction is received by the correction reception unit (52).

3. The information processing apparatus according to claim 2, further comprising a character recognition unit (42) configured to recognize characters from the past form image,
wherein the instruction output unit (56) is configured to output an instruction to the large language model to extract the value of the determined item from a first recognition result obtained by recognizing the form image to be analyzed, the instruction including a second recognition result obtained by the character recognition unit (42) recognizing the past form image, and a corrected value of an item for which the correction is received among values of the items extracted from the second recognition result.

4. The information processing apparatus according to claim 2, wherein
the extraction unit (48) is configured to extract the values of the item from the past form image and the form image to be analyzed, based on form definition information that defines positional relationships between the item and the value of the item, wherein the extraction unit (48, 50) is configured to extract the value of the item from the past form image and the form image to be analyzed, based on training data including the correction received by the correction reception unit (52) for the value of the item extracted from the past form image, and
the item determination unit (54) is configured to determine, as the item for which the large language model is used, the item that is extracted based on the training data and has the value for which the correction is received by the correction reception unit (52).

5. The information processing apparatus according to claim 1,
wherein the instruction output unit (56) is configured to output an instruction to the large language model to classify the form image to be analyzed to cause the large language model to determine a type of the form image to be analyzed.

6. The information processing apparatus according to claim 1, wherein
the form image to be analyzed includes a plurality of form images, and
the instruction output unit (56) is configured to output, to the large language model, an instruction to divide form image data representing the plurality of form images into individual form image data.

7. The information processing apparatus according to claim 1, wherein the form image to be analyzed and the past form image are of the same form.

8. The information processing apparatus according to any one of claims 1 to 7, further comprising a data output unit (58) configured to output data for causing a display device to display a screen including the form image to be analyzed and the value of the item extracted from the form image to be analyzed.

9. An information processing system comprising:
the information processing apparatus (12, 14, 16) according to any one of claims 1 to 8; and
a user terminal (10) connected via a network to communicate with the information processing apparatus (12, 14, 16),
wherein the user terminal (10) includes a display control unit (24) configured to cause a display device to display a screen including the value of the item extracted from the form image to be analyzed.

10. An information processing method comprising:
extracting (S105) a value of an item from a past form image, the past form image being an image of a same form as a form image to be analyzed;
storing (S107), in a storage unit, extraction results and information related to a correction to the value of the item extracted from the past form image;
determining (S22), based on the information related to the correction, an item for which a large language model is used to extract a value among items included in the form image to be analyzed;
extracting (S26) a value of the determined item from the form image to be analyzed by using the large language model; and
registering (S34), in the storage unit, the value extracted using the large language model from the form image to be analyzed.

11. A carrier medium carrying computer readable codes which, when executed by a computer system, cause the computer system to carry out a method,
the method comprising:
extracting (S105) a value of an item from a past form image, the past form image being an image of a same form as a form image to be analyzed;
storing (S107), in a storage unit, extraction results and information related to a correction to the value of the item extracted from the past form image;
determining (S22), based on the information related to the correction, an item for which a large language model is used to extract a value among items included in the form image to be analyzed;
extracting (S26) a value of the determined item from the form image to be analyzed by using the large language model; and
registering (S34), in the storage unit, the value extracted using the large language model from the form image to be analyzed.
